# EUROPEAN PATENT APPLICATION

(11) **EP 3 786 876 A1**
(43) Date of publication of application: **03.03.2021**
(21) Application number: 19194457.8
(22) Date of filing: 29.08.2019
(51) Int. Cl.: G06Q 50/16, G06Q 50/18, G06Q 30/06

(54) **SYSTEM FOR MANAGEMENT OF ELECTRONIC TRANSACTIONS**

(71) Applicant: Offr Limited, Dublin 2 (IE)
(72) Inventor: Hoban, Robert, Dublin 2 (IE); Dawson, Niall, Dublin 2 (IE)
(74) Representative: Tomkins & Co

(57) **Abstract**

A hub access interface is provided for integration on an agent website hosted on an agent server, the hub access interface hosted on a hub server; the hub access interface configured to: receive a first input from a first user for forwarding to the hub server; receive a second input from a second user for forwarding to the hub server; wherein the hub access interface is switchable between at least a first mode and a second mode wherein in the first mode the interface is configured to: provide confirmation to the first user of the second input from the second user; and wherein in the second mode the interface is configured to: provide no confirmation to the first user of the second input from the second user.

## Description

### Field of the Invention

The present invention is directed to managing electronic transactions. In particular the invention is directed to a system for managing electronic interactions between parties engaging in a transaction for goods or services and for managing documentation associated with complex transactions.

### Background to the Invention

There have been many technological developments in recent years which have facilitated the purchase of goods and services by users utilizing electronic means. For example, electronic payments have fast become a normal method for consumers to purchase goods. Small items of low value can be browsed on multiples types of vendor or market place type websites and users are able to select and purchase the items directly from the website using electronic means such as a verified online credit card payment or a payment from a user account on a third party payments website. For larger value transactions, users may not be provided with a viable online facility to complete a purchase. Furthermore, for transactions involving items which further carry legal formalities, for example real estate property, a user is typically barred from making direct online purchases from a website in the same manner as is possible for low value items. In addition, the existing processes for transactions involving real estate are typified by long delays, lack of transparency and multiple manual steps such as phone calls and signing of documents. The process frequently fails due to the omission of one or more steps. A system for improving the electronic sale processes of complex assets would be an improvement on the state of the art.

### Summary of the Invention

The present invention provides a hub access interface for integration on an agent website hosted on an agent server, the hub access interface hosted on a hub server; the hub access interface configured to: receive a first input from a first user for forwarding to the hub server; receive a second input from a second user for forwarding to the hub server; wherein the hub access interface is switchable between at least a first mode and a second mode wherein in the first mode the interface is configured to: provide confirmation to the first user of the second input from the second user; and wherein in the second mode the interface is configured to: provide no confirmation to the first user of the second input from the second user.

This is advantageous as the hub access interface provides that a user may provide input to the interface hosted on a website which can be forwarded and managed by the hub server or "hub". For example, if the interface is being used by a given user on a website in order to complete an electronic transaction, this provides that while the user may wish to provide an input to the agent via the interface on the agent website, the hub acts to store the interaction and further provides that the hub can facilitate further interaction between the user and the agent with respect to the transaction. The hub can act as a central store where both the agent and the user may have a record of their interactions.

Thus, transparency of interaction between the first user and the agent is achieved. In addition, transparency of interaction between the second user and the agent is achieved. In addition, the hub access interface is switchable between modes, the modes providing a different manner of operation. This is advantageous as it provides that the hub can provide different functionality best suited to the type of user. In a first mode, the first user is provided with a confirmation that a second user has provided input. Thus, the first user is provided with the facility to be informed of the interactions of additional users with the agent. In addition, the second user can receive confirmation of the first users initial and any subsequent input. In this manner, both the first and second users are provided with transparency with respect to each parties interactions with the agent. In a second mode of operation, no confirmation is provided to the first user that a second user has provided input. In addition, the second user does not receive confirmation of the first users initial and any subsequent input. Thus, this provides that input provided by a user remains confidential.

The first input is a first value and the second input is a second value and the interface may be configured in the first mode to provide confirmation to the first user that the second value exceeds the first value. When the first and second inputs are values, i.e. numerical values, it is advantageous for the first user to be informed of the second value input by a second user and whether that value exceeds the value input by the first user. For example, if the first value is a monetary value assigned by the first user to an entity, it is it is advantageous for the first user to be informed of a second monetary value for the same entity input by a second user and whether that value exceeds the value input by the first user. The first user is thus provided with information about the value input by a second user without the need to further send a request for the information.

The hub access interface may be further configured to provide confirmation to the second user that the second value is more than or equal to a threshold value, the threshold value assigned at the agent server. When the second input is a value, for example, if the second value is a monetary value assigned by the second user to an entity, it is it is advantageous for the second user to be informed of that the monetary value matches or exceeds a threshold value assigned to the entity. The second user is thus provided with information about their input value with respect to a threshold value without the need to further send a request for the information.

The hub access interface may be further configured to upload a file from the first user or second user to the agent server and the hub server and download a file to the first user or second user from the agent server and the hub server. Thus, the hub access interface provides that files can be uploaded by a user via the interface to either the agent server, the hub server or both and furthermore that the user can download files from either the agent server, the hub server or both. As such, the transfer of information between the necessary parties in a given transaction is made more efficient.

The file uploaded or downloaded may be a document, electronically signed by the first user or the second user. This is advantageous as the hub provides for providing or retrieving documents by a user without the requirement to seek physical copies. Furthermore, the interface provides for the upload and download of electronically signed documents. As such, the need for physical documents to be obtained and physically signed is obviated.

The hub access interface may be further configured to submit a request from the first user for electronic payment. This is advantageous as the hub provides for submitting an electronic payment. The user may input a request for an electronic payment into the hub interface. They may then be redirected to a third party payment website or the facility for electronic payment may be comprised in the hub.

The input may be a meeting scheduling request. This is advantageous as the hub access interface provides the facility to manage an electronic diary. The meeting schedule request may be in the form of a requested time input by the user indicating when they wish to meet an agent. A display of available times may be provided from which the user can select an available time. A meeting scheduling request may be sent by the user via the hub access interface. The request may be received by the agent server who can respond to the user to confirm the request. Furthermore, the request may be stored by the hub server. Alternatively, a meeting request may be in the form of a requested time input an agent indicating when they wish to meet a user.

The hub access interface is switchable between at least a first mode and a second mode. The modes may comprise i) a tender mode ii) an auction mode, iii) a private sale mode. This is advantageous as in each mode, the hub can provide functionality specific to the sale type.

In at least one of the modes, the hub access interface may be configured to provide a countdown timer, for the duration of which, the interface is configured to receive inputs from a first user and a second user. This is advantageous as it provides, for example, that a user may be provided with the amount of time left in an auction during which they can continue to submit inputs to the interface, for example the input being in the form of a bid for an item in the auction.

The hub access interface may be integrated on an agent website. This is advantageous as it provides that users may utilise the hub access interface to interact with an agent website while also having an independent record of their interaction with the agent website in the hub access server. In this manner, greater transparency of interaction is achieved between the user and the agent. In addition, the agent may utilise the hub access interface to provide information from the agent website for display to a user via the hub access interface. In addition, integrating the hub access interface into an agent website provides for greater level of interoperability between a user and the agent website which is not provided by the agent website alone. The hub access interface provides the enhanced functionality offered by the hub and hosted by the hub server to the agent website without the need for the agent to provide such functionality via their own website.

The hub access interface may be integrated on the agent website in an iframe. This is advantageous as it provides for an efficient integration of the hub access interface into an existing website.

The first input is a bid value for an item displayed on the agent website. This is advantageous as the hub provides a gateway for multiple users to provide values or "bids" for items listed on an agent's website. In this manner, an agent is provided with the facility to manage bidding and subsequent transactions via their existing website. Furthermore, users or "bidders" are provided with transparency as to the input values or "bids" of other users. Furthermore, if a transaction is completed, a user may further upload documents to complete a sale or instigate payment or part payment via the interface.

The invention further provides a system comprising: a hub access interface hosted on a hub server; an agent website hosted on an agent server, wherein the hub access interface is integrated into the agent website, the hub access interface configured to: receive a first input from a first user for forwarding to the hub server; receive a second input from a second user for forwarding to the hub server; wherein the hub access interface is switchable between at least a first mode and a second mode wherein in the first mode the interface is configured to: provide confirmation to the first user of the second input from the second user; and wherein in the second mode the interface is configured to: provide no confirmation to the first user of the second input from the second user.

### Brief Description of the Drawings

**Figure 1** shows a schematic overview of the invention
**Figure 2** show a schematic overview of the invention
**Figure 3A** shows an agent website on which the hub access interface of the invention has been integrated
**Figure 3B** shows the hub access interface launched on the agent website
**Figure 4** shows an example of a hub access interface in accordance with the present invention as viewed by a user on their device
**Figure 5** shows an example of an input "offer" being made via the hub access interface.
**Figure 6** shows the process of signing up to the "hub".
**Figure 7** shows confirmation of details and confirmation of an offer being received
**Figure 8** shows the upload or download of documents via the interface
**Figure 9** shows scheduling a meeting request via the interface
**Figure 10** shows the process of signing up to an auction
**Figure 11** shows the auction timer and bids currently submitted in the auction
**Figure 12A****,** **12B** **and** **12C** is a schematic flow of a user interaction with the interface and system of the invention
**Figure 13A** **and** **13B** is a schematic flow of an agent interaction with the interface and system of the invention

### Detailed Description

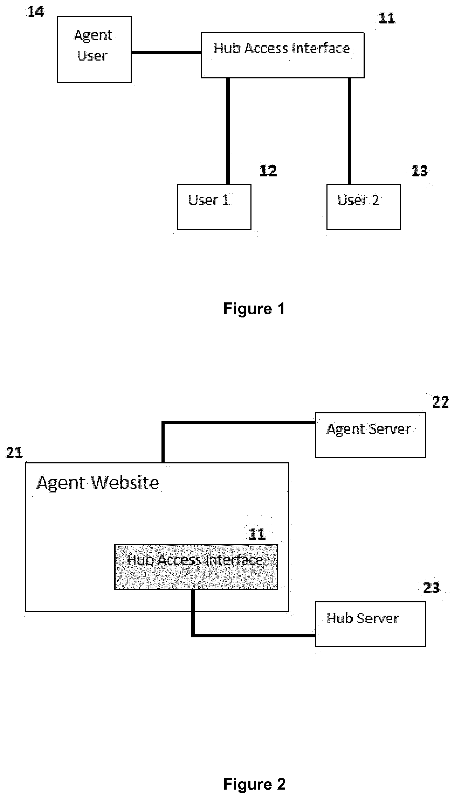

The present invention will be described with reference to the accompanying drawings. **Figure 1** and **Figure 2** show a schematic overview of the invention. A hub access interface 11 is provided for integration on an agent website. The agent website 21 is hosted on an agent server 22. The hub access interface is hosted on a hub server 23. The agent website may be further hosted on any server remote from the hub server 23. The hub access interface is configured to receive a first input from a first user 12 for forwarding to the hub server 23. The hub access interface may also be configured to receive a first input from a first user 12 for forwarding to the agent server 22 and the hub server 23. The input may be forwarded to either the agent server or the hub server or to both. The first user may access the hub access interface by visiting the agent website on any web enabled device, for example on a smart phone, tablet or desktop computer. The term "agent" as used herein with respect to the agent website and agent server is not intended to be limited to "agents" such as those engaged on the selling or offering for sale of goods or services. It is used to distinguish the agent server and agent website from the hub server, wherein the hub server is configured to host the hub access interface and is separate from the agent server.

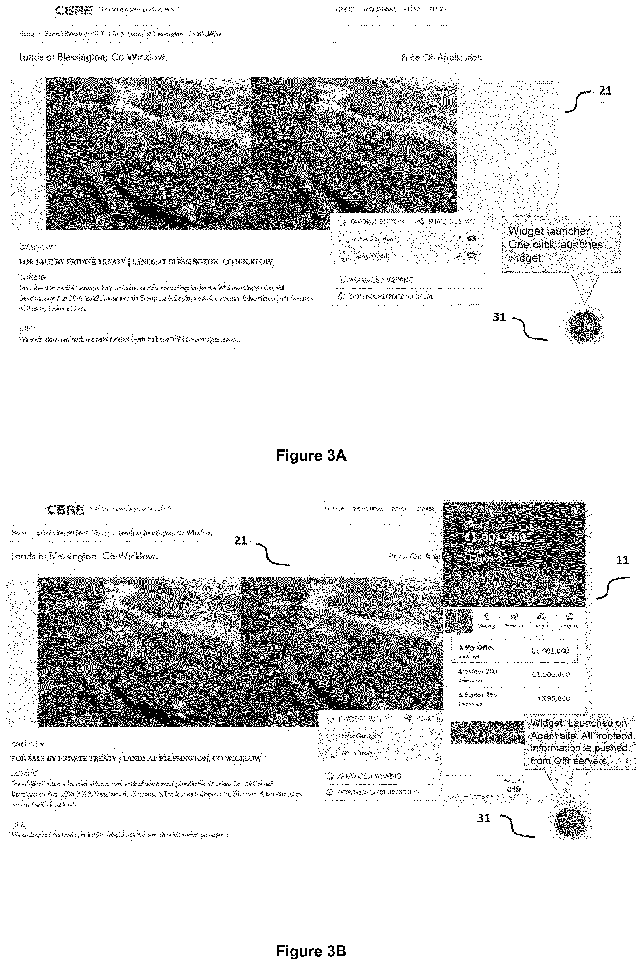

**Figure 3A** shows an agent website 21 on which the hub access interface has been integrated. Upon visiting the website, a user may see the hub access interface displayed initially as an icon 31 on the page. Clicking on the icon via a mouse or finger serves to expand or launch the hub access interface. **Figure 3B** shows the interface 11 launched on the agent website 21 wherein the interface is ready to accept input from the user. In this example, the agent website is a real estate property website, however the interface is suitable for integration on any website. Furthermore, in the present example, the hub access interface is tailored for users who wish to engage in a real estate transaction, however the hub access interface may be tailored for use in different transaction types. Examples of different transaction types include transactions in different industries such as the marine, aviation and utilities sectors or any sector wherein complex assets are exchanged. The input may be provided by the user via a dialog box or by selection of one of a plurality of icons displayed on the interface.

The hub access interface is further configured to receive a second input from a second user 13 for forwarding to the hub server 23. The second input may also be forwarded to the agent server 22 and the hub server 23. The second user 13 may also access the hub access interface by visiting the agent website on any web enabled device, for example on a smart phone, tablet or desktop computer. While only a first and second user are described herein for brevity, additional users may further access the hub access interface from their respective devices. The hub access interface is switchable between modes, each mode providing a different manner of operation. In a first mode, the hub access interface is further configured to provide confirmation to the first user of the second input. The confirmation may be displayed via the hub access interface on the screen of the first user. The user may be alerted to the confirmation by a sound or vibration alert at the user device. An agent may also access the hub access interface as an agent user 14. The agent user 14 is provided with different functionality via the hub access interface and is provided with capabilities to communicate with the first and second users.

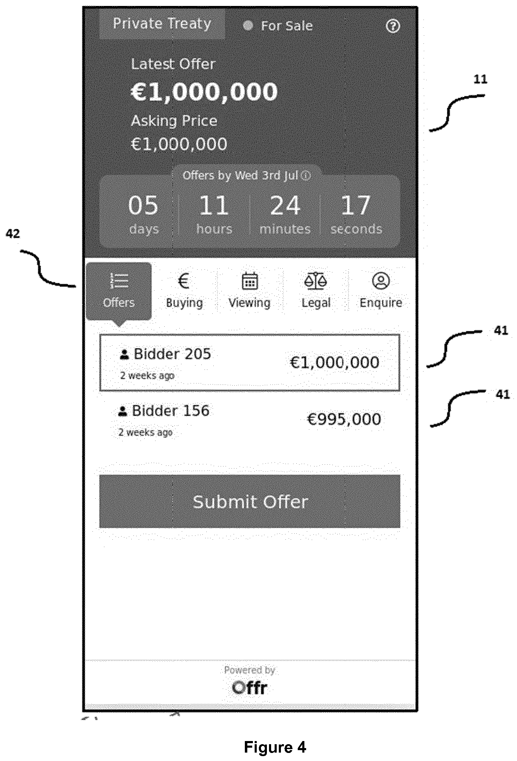

**Figure 4** shows an example of a hub access interface 11 in accordance with the present invention as viewed by a user on their device. The interface is tailored for use in a real estate transaction. The user may view confirmations of inputs 41 provided by additional users. In this example, the inputs are displayed as numerical values or "bids" 41. The user labelled as "Bidder156" has input a value or bid of €995,000 while the user labelled "Bidder 205" has input a value or bid of €1,000,000. Current bids or "offers" are viewable by pressing an "offers" tab 42.

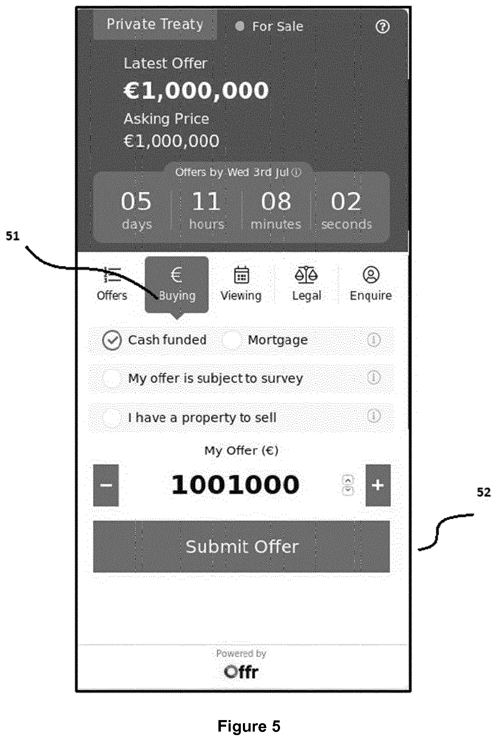

The user may provide input via the interface by selecting a "buying" tab 51 and by inputting a numerical value and pressing a "submit" button 52 as shown in **Figure 5****.** The additional users, for example, "Bidder156" and "Bidder 205" will be provided with confirmation of the present user's submission and will see the user's input of €1,001,000 on their devices via the interface 11.

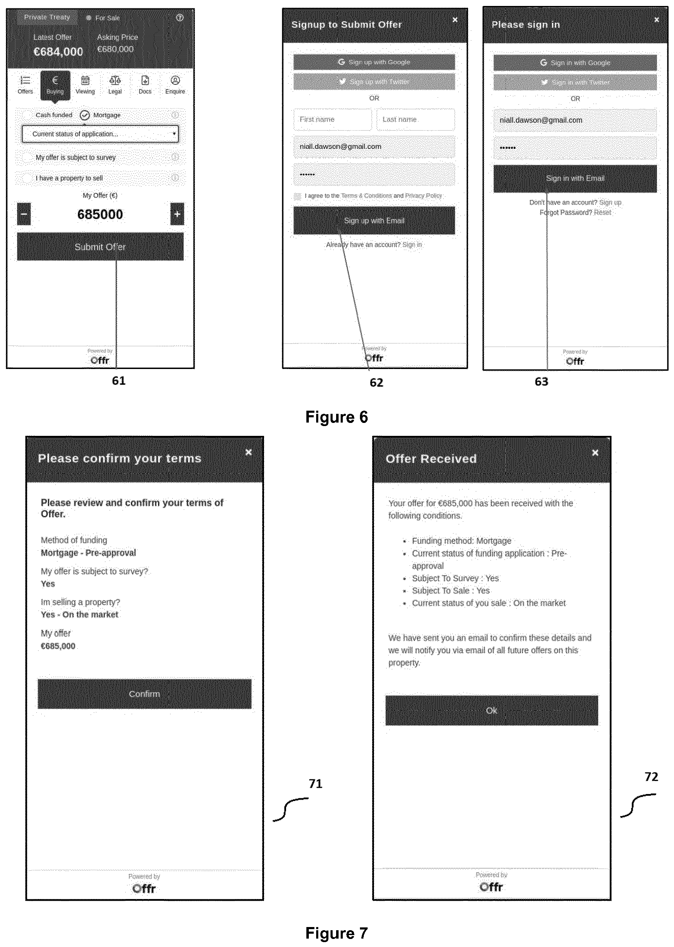

A user visiting the agent website may not be signed up to use the hub access interface. While the interface will be viewable to them and allow them to interact, if the user wishes to submit a bid, they will be requested to sign into the hub to allow them to proceed to submit the offer. Sign in may take place via the hub access interface or via the agent website. There is no requirement for a user to sign into or access the hub server in order to access the hub interface. **Figure 6** shows an example of a user wishing to make an offer or "bid" 61 via the interface and being request to sign up to use the hub. Sign up, for example, may be via an email address or via a social media account 62, 63. The user will be requested to confirm some details about their bid and will be sent a confirmation of their offer 71, 72 (**Figure 7**). The confirmation may be sent via an email or to the user via the hub access interface or both. Emails may keep a user informed of the status of their bids and other user bids if, for example, the user is not currently viewing or signed in to the hub access interface.

The hub access interface may be further configured to provide confirmation to a user that their submitted value is more than or equal to a threshold value, the threshold value assigned at the agent server. For example, if an agent, in this example a real estate agent has agreed with their client an upper limit at which the client is satisfied to sell their property, this value can be assigned in the agent server. If this threshold is reached or exceeded, the user may be informed via a confirmation or alert.

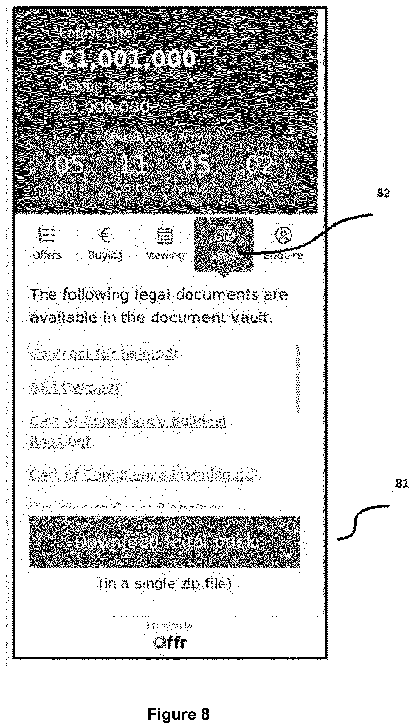

The hub access interface is further configured to upload a file from the first user to the agent server and the hub server. The file to be uploaded may be taken from the user's device and uploaded via the hub access interface to the agent server or the hub server or to both. The hub access interface is further configured to download a file to the first user from the agent server and the hub server. The file to be downloaded may be saved to the user's device from the agent server or the hub server or to both the hub access interface. It is frequently the case that complex transactions require documentation of different types to be exchanged between bidders, sellers and further third parties. The present invention provides that files uploaded or downloaded via the hub access interface may be in the form of electronic documents 81 (**Figure 8**). The documents may be, for example, legal contracts, building compliance certificates, planning documents or any further document required to complete a transaction. The documents may be uploaded to the agent server or the hub server or to both. The hub server may serve as a central repository for all documentation relating to a given transaction. This serves to reduce delays in completing a transaction and further serves to introduce transparency to a transaction as both buyers and sellers are aware of whether or not the required documents to complete a transaction are currently in place. The documents currently stored by the hub server may be viewed by pressing the "legal" tab 82. The documents uploaded or downloaded may be electronically signed by users via the interface. The documents may be signed by any suitable electronic means, for example via DocuSign ®.

The hub access interface may be further configured to submit a request from the first user for electronic payment. The user may input a request for an electronic payment into the hub access interface. They may then be redirected to a third party payment website (e.g. Stripe ™) or the facility for electronic payment may be comprised in the hub server which can in turn process the requested payment.

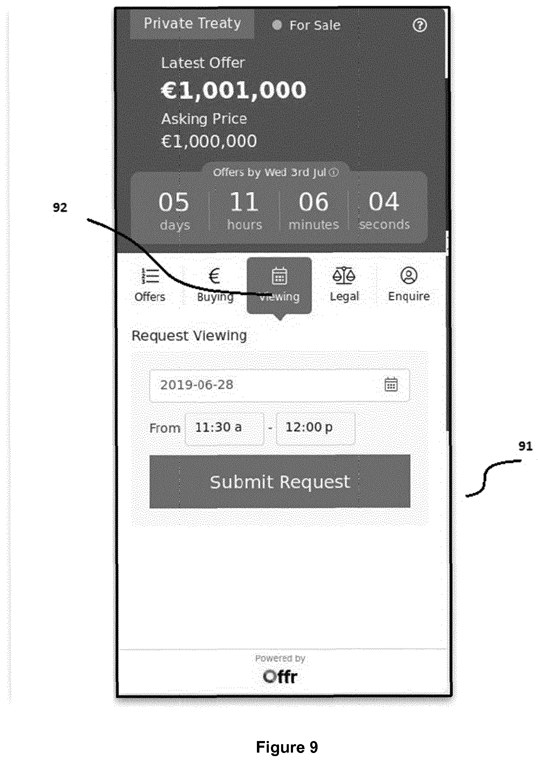

The hub access interface is further configured to accept input in the form of a meeting scheduling request 91 (**Figure 9**). A user selects the "viewing" tab 92 and may submit a request to meet an agent at a proposed time. The request will be forwarded to the agent and may be viewed and accepted by an agent using the hub access interface.

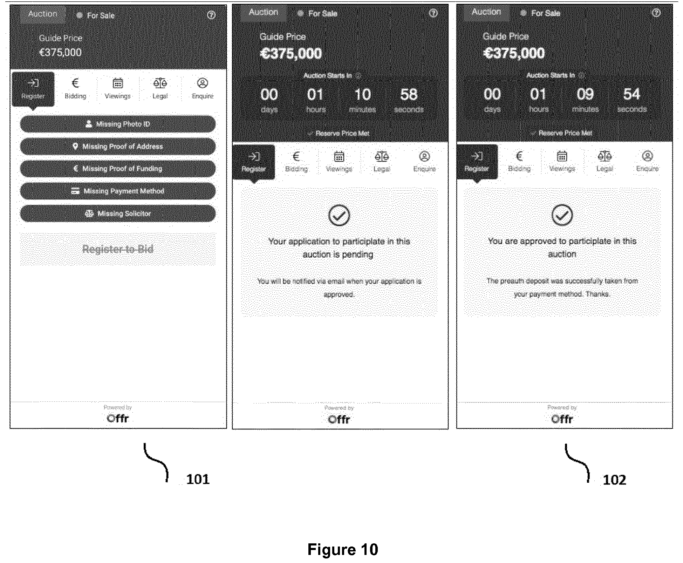

The hub access interface may be further configured to be switched between a plurality of operational modes, each mode configured for a different user type. The modes may comprise i) a tender mode ii) an auction mode, iii) a private sale mode. Each operational mode is configured to handle different transaction processes. In a private sale mode, the users will be sent confirmation of the actions of other users as described herein. In a tender mode, users may be requested to provide "blind" bids which are not visible to other users. In this mode, the hub will not sent confirmation to users about the bids or bid values of other users. The user types for each operational mode may be required to provide additional verification that they are a suitable user type for the selected operational mode. For example, for an auction mode, a user may be requested to provide photo id, proof of address, proof of funds, method of payment and legal representation 101. The user may receive notification if one or more of the verifications has yet to be provided. Once each of the verifications has been provided, the user may receive a confirmation of their approval to participate in the auction 102 **(****Figure 10**).

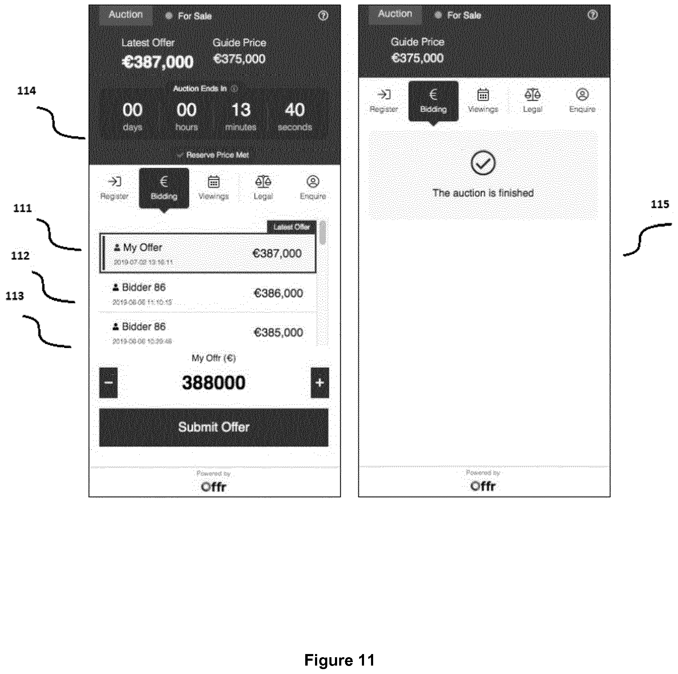

In auction mode, the hub access interface is additional configured to provide a countdown timer 114, for the duration of which, the interface is configured to receive inputs from a number of users 111, 112, 113 (**Figure 11**)**.** As such, the interface provides that multiple users may make bids for a property for a time limited period. The users are informed of the current bids from each participating user in real time. Furthermore, the user is provided with confirmation as to their current bid and its value with respect to the bids of the other participating users. When the timer expires, the auction is ended 115. The timer can be extended if required by an administrator to allow additional time for bids to be received. The user with the highest bid is sent a confirmation that they have provided the highest bid and that they should proceed to complete the transaction via the interface. The other non-highest bidders receive confirmation that they have not provided the highest bid and that they cannot proceed to complete the transaction. The countdown timer may also be configured to operate in the other modes of operation, the tender mode and the private sale mode. Furthermore, the countdown timer may be disabled in a given mode.

Another modes of operation includes a "buy it now" mode wherein the first bid received to meet a threshold value will be successful. A further mode of operation includes a rental mode wherein a threshold value may indicate a weekly or monthly rental value for a property.

The hub access interface may be integrated on the agent website in an "iframe" or Inline Frame. This provides for an efficient integration of the hub access interface into an existing website. Furthermore, this type of integration provides that the hub access interface may be modified or updated via the hub server and the updates displayed on the agent website without disruption or modification of the agent website. The hub thus facilitates transactions between users through an iframe onto a 3rd party, i.e. agent website. The hub interface can be configured in a "white labelled" manner i.e. it may be configured to have the look and feel of the agent website. The hub access interface is customisable. This is advantageous as it provides a seamless visual integration with the agent website. Furthermore, features within the hub may be turned on or off by an administrator as required. Typically, property transaction platforms are either hosted entirely on 3rd party sites or are white-labelled via a subdomain. The present interface and system provide a platform integrated into an agent site that enables transactions to happen on the agent site. Depending on the method of sale, and action being performed, the hub access interface may use HTTP POST / GET via AJAX and web-socket communications with the hub back-end system to action user requests. The hub is customisable and can be designed to fully integrate with the brand of the agent site. The colour theme / positioning and language can be changed to suit the agent's platform and audience. The launcher icon also has the ability to be positioned independently of the hub access interface. Agents may have numerous interfaces which run on a variety of sites all promoting the same property.

Elements of the present invention have been described herein. The invention will now be described in use. Firstly from the perspective of a user utilizing the hub access interface for bidding on a real estate property and secondly from the perspective of an agent utilizing the hub access interface to manage interactions with such users.

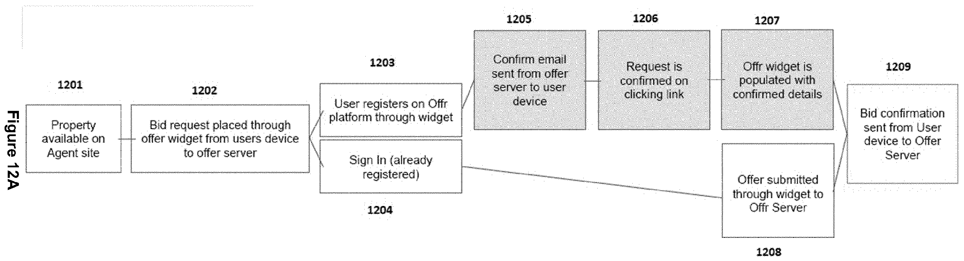

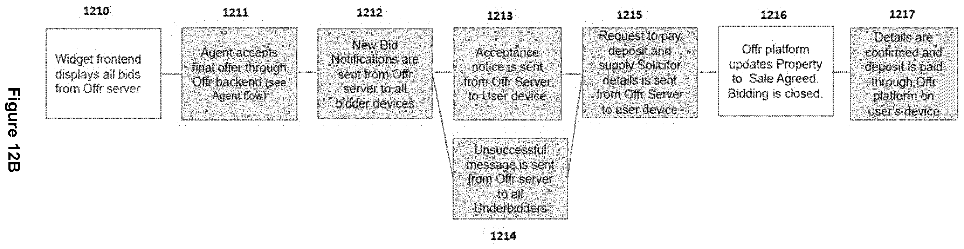

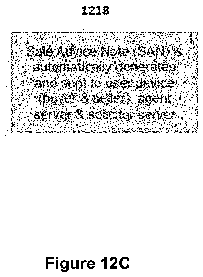

**Figures 12A****,** **12B** **and** **12C** describe a flow of a user's engagement with the interface and system of the present invention. At 1201, a user views an agent's website and sees a real estate property for sale. At 1202, a bid request is submitted via the hub access interface from the user's device to the hub server (here indicated as the "Offr" server). If the user is already registered and signed in to the hub, the process may proceed from step 1204 to step 1208 and the bid or offer is submitted to the hub server. If the user is not already registered, they first register on the hub via the hub access interface at 1203. A confirmation email is sent from the hub server to the user device 1205, the user's request is confirmed by the user by clicking on a link 1206 and the hub access interface is populated with the user's details 1207. A bid confirmation is sent to the user device from the hub server 1209.

The user may view all bids submitted by other users 1210. Similarly, an agent may view all bids submitted by all users. An agent may accept a user offer 1211. A notification is sent to all users of any bids from additional users 1212. If an offer is accepted by the agent, an acceptance notice is sent from the hub server to the user device which has submitted the accepted bid 1213. In addition, an additional message is sent from the hub server to users whose bids have not been accepted (underbidders) 1214. A request to pay a deposit and to supply legal details is sent from the hub server to the user device of the accepted bidder 1215. The user may input a request for an electronic payment into the hub access interface as previously described in order to pay the deposit. The hub server updates the hub access interface so that the property is listed as unavailable for bidding 1216. The user confirms their details and submits an electronic payment via the hub access interface 1217. A Sale Advice Note in the form of an electronic document is automatically generated and sent to the user device and to the agent server 1218. The document may be downloaded to the user device. The document may further be sent to an additional third party server such as a legal representative. A contract for sale is generated for signature by the user and the seller of the property. The transaction is considered to be completed.

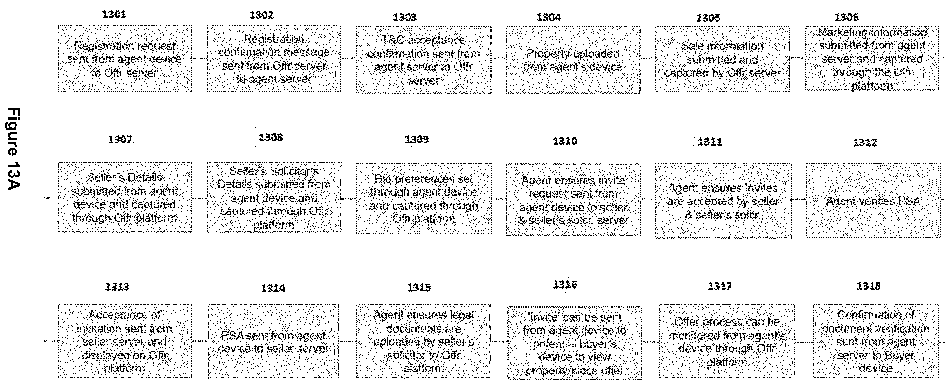

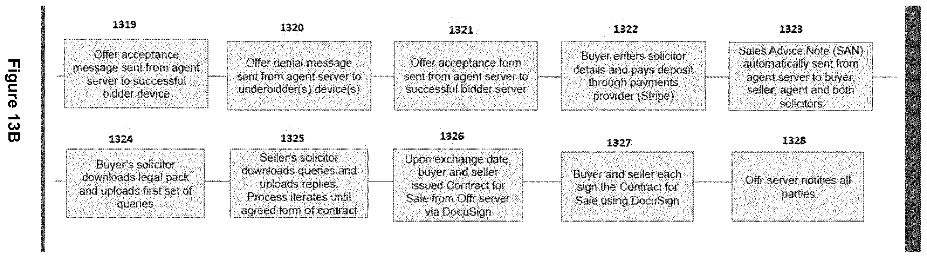

**Figures 13A** **and** **13B** describe a flow of an agent's engagement with the interface and system of the present invention. While the above description has largely focused on a user or multiple users interactions with the system via the hub access interface, it should be noted that agents may also access the interface to review user interactions and to communicate information and /or provide documents to users. Furthermore, agents may upload information, for example property listings and additional information from their website to the hub access interface so that a user may readily interact with the listing.

An agent sends a registration request from a device (for example, a smart phone, tablet or desktop computer) to the hub server 1301 (here indicated as the "Offr" server). The request indicates that the agent seeks access to the hub access interface and requests integration of the interface on their website. A registration message is sent from the hub server to the agent server 1302. The agent accepts terms and conditions and sends confirmation from the agent server to the hub server 1303. Property information may now be uploaded from the agent server via the agent device to the hub server. Sale status and pricing information may also be uploaded from the agent server to the hub server 1305. This information may then be configured to appear in the hub access interface of users. Other information such as marketing information may be submitted by the agent to the hub server 1306.

If a property is for sale and is being managed by the agent, the agent provides the seller's details to the hub server 1307, the details may further include information such as the legal representation of the seller 1308. Such information is important for streamlining the completion of a transaction and provides for transparency between a seller and a potential buyer. The lack of such information or a delay in submitting such information is frequently the cause of the failure of a transaction negotiated without the system of the present invention. Bid preferences, for example such as an acceptable bid limit, may be set by the agent and submitted to the hub server 1309. The agent sends "invites" to the seller and their legal representative to "join" the hub server, i.e. to be provided access to the server and to the hub access interface 1310. The "invites" are accepted by the seller and their representation 1311. The agent verifies PSA 1312. The acceptance of the invitation by the seller is displayed on the hub access interface 1313. The PSA is sent from the agent device to the seller device 1314. The agent requests that the seller upload documents to the hub server. The agent may also request that a third party, such a legal representative, upload documents to the hub server 1315. These documents are uploaded from the seller's device and legal representative's device respectively via the hub access interface. The seller is now effectively "engaged" in the system. Their property is viewable in the hub access interface and bids may be accepted from multiple users. At this point, an "invite" may be sent from the agent device to multiple registered users 1316. The "invite" can be displayed on the users' device and includes a proposal to view the seller's property and submit an offer. Bids from multiple users are viewable by the agent through a hub access interface integrated on their website. This provides the agent with the capability to review and manage multiple offers and interaction with multiple users in real time 1317. The agent can also verify that a user (i.e. a potential buyer) has submitted the relevant documentation required to complete a transaction once an offer has been accepted 1318. This removes delays from completing the transaction after the acceptance of an offer.

If a user makes an offer with is acceptable to the seller, the agent will inform the user that their offer is successful. An offer acceptance message is sent from the agent server to the successful user device 1319. It is noted above at 1213 that an acceptance notice may also be sent from the hub server to the user device which has submitted the accepted bid. An offer acceptance form is sent from the agent server to the successful bidder device 1321. The successful bidder is requested to provide legal representative details and pay a deposit amount 1322. A Sales Advice Note (SAN) is automatically generated by the hub server and sent to the user device and to the agent server 1218. The SAN may be provided directly to the user from the hub server or may be forwarded from the agent server to the user. The SAN may also be forwarded from the agent server to third parties such as legal representatives 1323.

Legal representatives can download a set of documents from the hub server representing a "legal pack" 1324 (See also element 81 in Figure 8). Legal representatives of the buyer and seller may exchange information via the hub access interface 1325. A Contract for Sale document is generated at the hub server and provided to the buyer and seller devices 1326. The document may be electronically signed, for example using DocuSign ® 1327. Once the contract is signed, the transaction is considered to be completed. The hub server provides confirmation to all parties, the buyer, seller, the agent and any additional third parties of the completion of the transaction 1328.

A transaction including multiple bidders for a complex asset such as real estate is typically completed over the course of 3 months using the hub access interface and the features comprised therein such as the submission of bids and upload/download and storage of documents. A transaction completed without using the interface is typically completed over the course of 7 to 12 months. The invention introduces considerable efficiencies and transparency into the transaction process and the hub server provides for central management of multiple user interactions.

The words "comprises/comprising" and the words "having/including" when used herein with reference to the present invention are used to specify the presence of stated features, integers, steps or components but do not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

## Claims

1. A hub access interface for integration on an agent website hosted on an agent server, the hub access interface hosted on a hub server; the hub access interface configured to:
receive a first input from a first user for forwarding to the hub server;
receive a second input from a second user for forwarding to the hub server;
wherein the hub access interface is switchable between at least a first mode and a second mode wherein in the first mode the interface is configured to:
provide confirmation to the first user of the second input from the second user; and
wherein in the second mode the interface is configured to:
provide no confirmation to the first user of the second input from the second user.

2. The hub access interface of claim 1 wherein the first input is a first value and the second input is a second value, and in the first mode the interface is configured to provide confirmation to the first user that the second value exceeds the first value.

3. The hub access interface of claim 2 further configured to provide confirmation to the second user that the second value is more than or equal to a threshold value, the threshold value assigned at the agent server.

4. The hub access interface of any preceding claim wherein the interface is further configured to:
upload a file from the first user or second user to the agent server and the hub server;
download a file to the first user or second user from the agent server and the hub server.

5. The hub access interface of claim 4 wherein the file is a document, electronically signed by the first user.

6. The hub access interface of any preceding claim wherein the interface is further configured to submit a request from the first user for electronic payment.

7. The hub access interface of any preceding claim wherein the input is a meeting scheduling request.

8. The hub access interface of claim 1 wherein the at least first mode and second mode comprise i) a tender mode ii) an auction mode, iii) a private sale mode.

9. The hub access interface of any preceding claim wherein in a least one mode, the interface is configured to provide a countdown timer, for the duration of which, the interface is configured to receive inputs from a first user and a second user.

10. The hub access interface of any preceding claim integrated on an agent website.

11. The hub access interface of claim 10 wherein the hub access interface is integrated in an iframe.

12. The hub access interface of any preceding claim wherein the first input and second input are bid values for an item displayed on the agent website.

13. A system comprising:
a hub access interface hosted on a hub server;
an agent website hosted on an agent server, wherein the hub access interface is integrated into the agent website, the hub access interface configured to:
receive a first input from a first user for forwarding to the hub server;
receive a second input from a second user for forwarding to the hub server;
wherein the hub access interface is switchable between at least a first mode and a second mode wherein in the first mode the interface is configured to:
provide confirmation to the first user of the second input from the second user; and
wherein in the second mode the interface is configured to:
provide no confirmation to the first user of the second input from the second user.

14. The system of claim 13 comprising the hub access interface of any of claims 2 to 12.
